# EUROPEAN PATENT SPECIFICATION

(11) **EP 2 122 847 B1**
(45) Date of publication and mention of the grant of the patent: **02.05.2012**
(21) Application number: 07854698.3
(22) Date of filing: 19.11.2007
(51) Int. Cl.: H04W 52/44, H04W 52/12, H04W 52/22, H04W 52/24

(54) **POWER CONTROL FOR COMPRESSED MODE IN WCDMA SYSTEM**
LEISTUNGSREGELUNG FÜR DEN KOMPRIMIERTEN MODUS IN WCDMA-SYSTEMEN
COMMANDE DE PUISSANCE POUR MODE COMPRESSÉ DANS UN SYSTÈME WCDMA

(30) Priority: 21.12.2006 US 614488; 22.12.2006 US 615326; 31.01.2007 US 669542; 30.03.2007 US 693974
(43) Date of publication of application: 25.11.2009
(73) Proprietor: Sony Ericsson Mobile Communications AB, 221 88 Lund (SE)
(72) Inventor: JOHNSON, Phillip Marc, Durham, NC 27713 (US); CAMP, William, Chapel Hill, North Carolina 27514 (US)
(74) Representative: Banzer, Hans-Jörg
(86) International application number: PCT/US2007/085144
(87) International publication number: WO 2008/076583

(56) References cited:
- EP-A- 1 069 704
- EP-A- 1 672 814
- WO-A-2004/073204

## Description

### BACKGROUND

The present invention relates generally to power control in a mobile communication system and, more particularly to a method and apparatus of closed loop power control for a transmitting station that is capable of operating in a compressed mode.

A known problem with WCDMA phones is excessive power consumption that results in undesirable current drain and short battery life. When engaged in normal voice communications, a WCDMA phone typically transmits and receives continuously. This continuous operation is one of the primary reasons for the undesirable current drain in WCDMA phones. A related reason for current drain is the presence of a duplexer in the transmit path that increases path loss.

U.S Patent Application Serial No. 11/614,488, publ. no US 2008151797 A1, describes a method of reducing power consumption in a WCDMA phone by allowing the mobile stations to switch to a compressed mode of operation during periods when the reverse link load is light. In the compressed mode, the mobile stations transmit intermittently with a desired duty factor rather than continuously and increase their transmit power during the "on" periods to maintain the same data rate.

One problem with compressed mode operation is that it disrupts the closed loop power control mechanism for controlling the transmit power of the mobile station. The base station monitors the strength of the received signal strength from the mobile station and varies the transmit power level of the mobile station inversely in proportion to the observed variations in received signal strength. With fast power control, the base station sends approximately 1600 power control commands per second. When the mobile station operates in a compressed mode, there will be intermittent "on" and "off" periods in the transmission from the mobile station. During the "off" periods, the power control mechanism will try to increase the mobile station transmit power. During the "on" periods, the base station will see power levels higher than expected and try to decrease the mobile station transmit power level.

Accordingly, there is a need for a power control mechanism that can accommodate compressed mode operation by a mobile station.

EP 1 672 814 A1 discloses a method of closed loop power control in a communication station, whereby the SIR of a received signal transmitted from a transmitting station is measured, and whereby the SIR measurements are filtered in a power control filter to generate filtered SIR measurements. Based on the filtered SIR measurements, periodic power control signals are generated and transmitted to the transmitting station to control the transmit power level of the transmitting station. The power control filter is adapted when the transmitting station is operating in a burst mode to compensate for intermittent transmission by the transmitting station in the burst mode.

### SUMMARY

The present invention provides a method of closed loop power control in a communication station as defined in independent claim 1 and a transceiver station for a mobile communication system as defined in independent claim 8. The dependent claims define preferred and advantageous embodiments of the invention.

### BRIEF DESCRIPTION OF THE DRAWINGS

Figure 1 is a schematic diagram of a mobile communication system.
Figure 2 illustrates an exemplary compression pattern with a 20% duty factor for compressed mode operation.
Figure 3 illustrates another exemplary compression pattern with a 20% duty factor for compressed mode operation.
Figure 4 illustrates an exemplary power control circuit.
Figure 5 illustrates an exemplary power adjustment circuit.
Figure 6 illustrates an exemplary transceiver station.
Figure 7 illustrates an exemplary method for adjusting power control.

### DETAILED DESCRIPTION

The present invention provides a method of reducing power consumption in a radio communication system. The present invention is described herein in the context of a WCDMA radio communication system, though the techniques may be applied in other radio communication systems. Further, this application explains how the principles of the present invention can be applied to a voice channel in a WCDMA system. However, the principles described herein may also be applied to other types of information, such as audio, video, and other data.

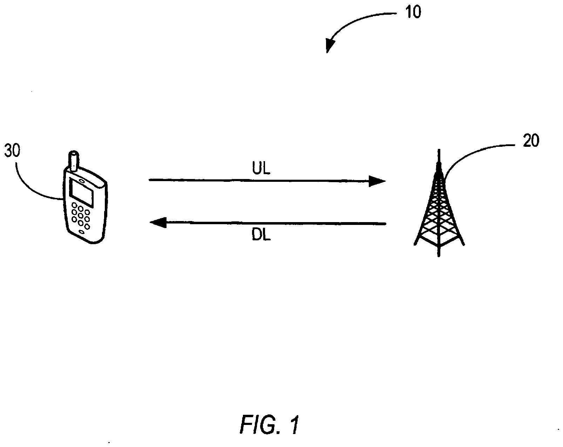

Figure 1 illustrates communications between a base station 20 and a mobile station 30 in a mobile communication system 10. The base station 20 transmits voice to the mobile station 30 over a downlink channel (DL). The mobile station 30 transmits voice to the base station 20 over an uplink channel (UL). The voice channels may be circuit-switched or packet-swtiched channels. For normal voice communications, the transmitter and receiver of the mobile station 30 are turned on continuously. The "always on" characteristic of voice communications in WCDMA systems results in excessive drain on battery power of the mobile station 30.

U.S Patent Application Serial No. 11/614,488 titled COMPRESSED MODE FOR REDUCING POWER CONSUMPTION filed Dec. 21, 2006 describes a method of reducing power consumption in a WCDMA phone by allowing the mobile stations 30 to switch to a compressed mode of operation. Compressed mode is one form of burst mode transmission. In the compressed mode, the mobile stations 30 transmit intermittently with a desired duty factor rather than continuously, and increase their transmit power during the "on" periods to maintain the same data rate. To briefly summarize, the base station 20 continuously monitors the uplink load and sends control signals to one or more mobile stations 30 to selectively enable and disable compressed mode operation depending on the uplink load. In general, compressed operation is enabled when the base station 20 has excess capacity on the uplink given the current loading conditions. If the uplink is heavily loaded, compressed mode is disabled. When the compressed mode is enabled, the mobile stations 30 individually switch between the compressed mode (e.g. intermittent transmission) and normal mode (e.g., continuous transmission) on the uplink depending on the current transmit power level of the mobile station 30. When the current transmit power of the mobile station 30 is low and the mobile station 30 has sufficient power headroom, it uses compressed mode for uplink communications. Otherwise, the mobile station 30 transmits in normal mode on the uplink.

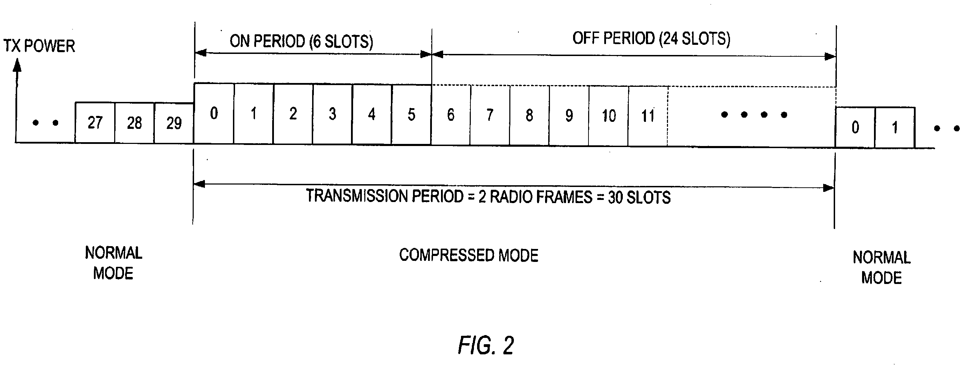

In compressed mode, the mobile station 30 transmits intermittently in accordance with a defined compression pattern. Fig. 2 illustrates an exemplary compression pattern with a 20% duty factor for compressed mode operation. In this example, the compression pattern is defined for a transmission period equivalent to two radio frames, (30 slots of .667 milliseconds in duration). The 30 slot transmission period matches the vocoder time block for WCDMA. The compression pattern specifies the slots in which the transmitter is turned on and turned off during a transmission period and repeats every transmission period. In this example, the compression pattern is represented by the bitmap 111111000000000000000000000000, where a 0 indicates an "off" slot during which the mobile station transmitter is turned off, and a 1 indicates an "on" slot during which the mobile station transmitter is turned on. A series of consecutive slots in which the transmitter is turned on is referred to herein as an "on period." A series of consecutive slots in which the transmitter is turned off is referred to herein as an "off period" or "idle period." The duty factor equals the number of on slots divided by the total number of slots in the transmission period. Thus, a 20% duty factor means that the transmitter is turned on for six slots in a 30-slot transmission period. The on slots may be consecutive, or may be distributed over the transmission period.

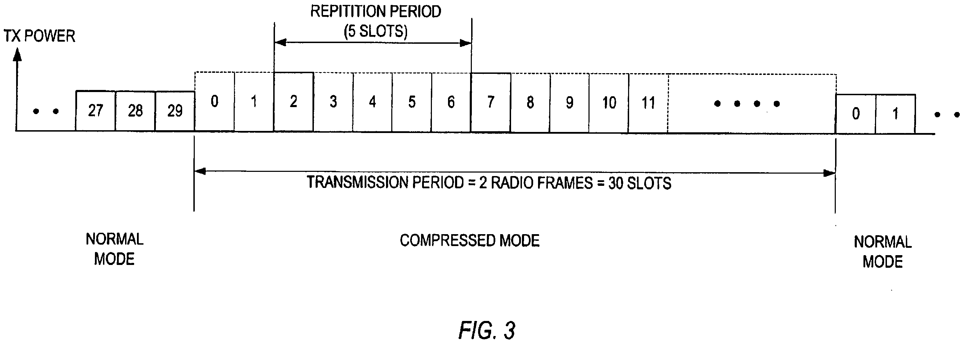

Figure 3 illustrates another exemplary compression pattern with a 20% duty factor. In this example, the mobile stations 30 transmit in evenly spaced bursts. In Fig. 3, the mobile station 30 transmits in every fifth slot beginning with slot 2 and ending with slot 27.

The compressed mode of operation can potentially interfere with closed loop power control mechanisms implemented in WCDMA systems. WCDMA systems typically implement fast power control to maximize system capacity. With fast power control, the transmit power level of the transmitting station may be updated at a frequency of 1600 times per second. The general idea is that the power control mechanism will track changes in channel conditions to maintain the received signal strength at a desired level. When the transmitting station operates in a compressed mode, the closed loop power control mechanism will continue to track changes in the received signal power. During off periods, the closed loop power control algorithm at the receiving station will try to increase the transmit power of the transmitting station. During on periods, the transmitting station may increase its transmit power to maintain the same data rate. Thus, the received signal strength at the receiving station will be higher than expected and the receiving station will try to decrease the transmit power of the transmitting station.

According to the present invention, a fast power control algorithm is used when the transmitting station is operating in a normal transmission mode. In order to prevent the power control algorithm from tracking the on and off periods during compressed mode, a filter can be applied to the signal strength measurements in the compressed mode of operation. The filtering needed may be dependent on both the frequency and duty factor of transmission in the compressed mode. In the example shown in Fig. 3, the transmitting station transmits three slots every 10 msec. The minimum filter in this case would average the signal strength measurements over a period of 5 time slots (3.33 msec). A more reasonable filter, however, would average the signal strength measurements over a period of 10 msec or 20 msec. The filter may weight the signal strength measurements depending on the recency of the measurements, with the most recent measurements receiving greater weight than the measurements that are more distant in time. The frequency of the power control signals can be adjusted to match the length of the filter. For example, with a 10 msec filter, it is may be desirable to transmit a new power control signal once every 10 msec.

The duty factor also affects the length of the filter that needs to be applied. For example, a compressed mode transmission with a burst frequency of 10 msec and a duty factor of 10% provides only one 1 msec burst over 10 msec period for which signal strength measurements can be made. In contrast, a compressed mode transmission with a burst frequency of 10 msec and a duty factor of 50% provides 5 msec of data in the same 10 msec period. In the first case, filtering over a 10 msec period may not provide enough data to ensure reliable power control. In the second case, filtering the signal strength measurements over 10 msec may allow the receiver to generate power control signals with a reasonable degree of confidence. Achieving the same confidence level in the first case would require that data be filtered over a 50 msec period.

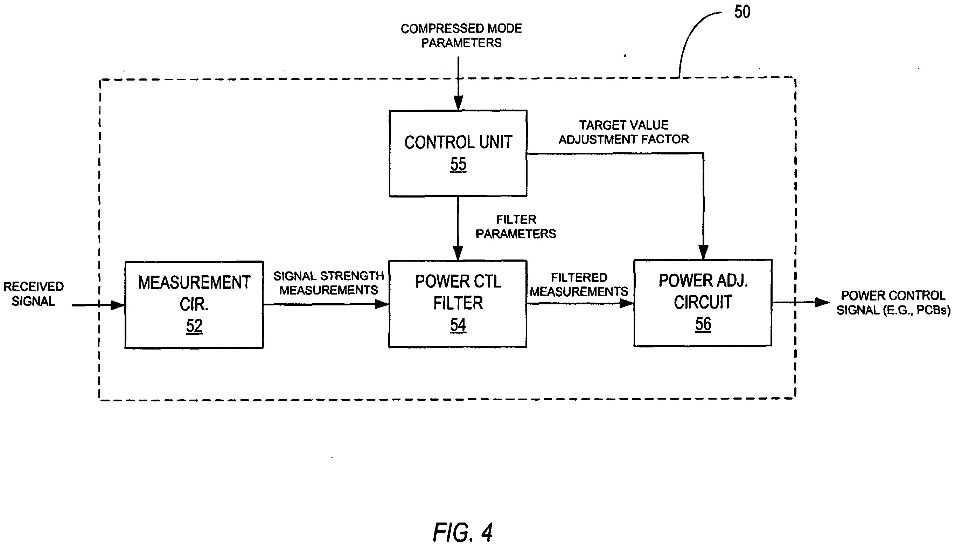

Fig. 4 illustrates a power control circuit 50 for a mobile station 30 or base station 20 in a mobile communication network 10. The power control circuit 50 comprises a measurement circuit 52, power control filter 54, power adjustment circuit 56, and a control circuit 55. The measurement circuit 52 measures the signal strength of the received signal from a transmitting station and provides signal strength measurements to the power control filter 54. The signal strength measurements typically comprise measurements of the received signal power for the applicable channel as determined by the spreading code. The power control filter 54 comprises a smoothing filter 54 for smoothing the signal strength measurements. In a normal mode of transmission, the filter smoothes the signal strength measurements over a very short period, if at all. When the transmitting station is operating in a compressed mode, the smoothing filter is adapted based on parameters of the compressed mode operation such as the burst frequency and duty factor to compensate for the intermittent operation. Filter parameters for the power control filter 54, such as the filter length and weighting coefficients, are determined by the control circuit 55 based on parameters of the compressed mode operation. For example, the control circuit 55 may adjust the filter parameters based on the burst frequency and duty factor of the compressed mode pattern as previously described. The control circuit 55 may also generate a target value adjustment depending on the compressed mode parameters. The target value adjustment is used to modify a target value used by the power control logic 56 for generating power control commands as hereinafter described. The smoothed signal strength measurements are output to the power adjustment circuit 56.

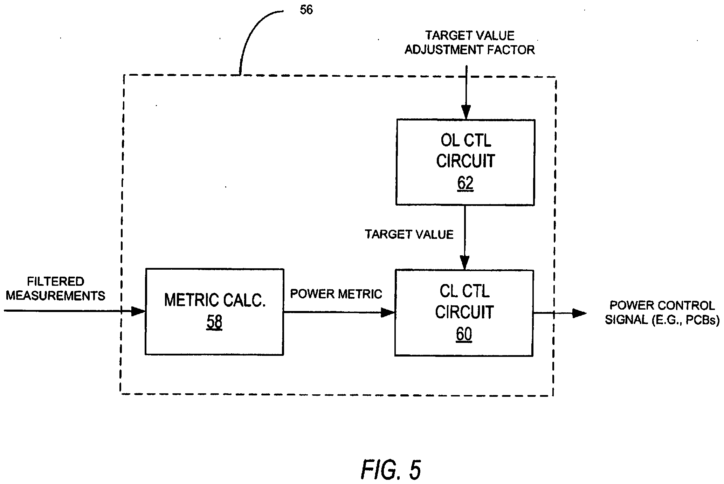

The power adjustment circuit 56, shown in Fig. 5, implements closed loop power control to control the transmit power level of the transmitting station. A metric calculator 58 computes a power metric based on the smoothed signal strength measurements. The power metric may comprise a signal-to-noise ratio (SNR) or signal-to-interference ratio (SIR) of the received signal. A closed loop control unit 60 evaluates the power metric and generates a power control signal in each control period. In normal mode, the control period is one .667 msec time slot. In compressed mode, the control period may be a plurality of time slots depending on the length of the filter. In one embodiment, the closed loop control unit 60 compares the SNR or SIR to a defined target SNR. The target SNR or target SIR is set by an open loop control unit 62. The open loop control circuit 62 typically adjusts the target value to maintain a desired frame error rate (FER). If the measured SNR is greater than the target SNR, the closed loop control unit 60 generates a power control signal to reduce the transit power level of the transmitting station. Conversely, if the measured SNR is less than the target SNR, the closed loop control unit 60 generates a power control signal to increase the transit power level of the transmitting station. Typically, the power control signals are single bit commands known as power control bits (PCBs) that instruct the transmitting station to either increase or decrease its transmit power level by one step (e.g., 1 dB). A "1" commands the transmitting station to increase its transmit power level by one step and a "0" commands the transmitting station to decrease its transmit power level by one step. However, those skilled in the art will appreciate that the power control signals could also specify step sizes with higher resolution (more bits) or absolute transmit power level.

During compressed mode operation, the closed loop control circuit 60 will respond more slowly to changes in channel conditions. Thus, the commanded power level must be adequate for a longer period of time. Consequently, it may be desirable to adjust the target SNR during compressed mode operation to provide greater margin in case the channel conditions worsen before the next power control command is sent. The amount of the margin may be determined by the group delay of the power control filter 54. In one embodiment, the control unit 55 generates a target value adjustment factor based on the compressed mode parameters and/or the filter parameters. This target value adjustment factor is used by the open loop control circuit 62 to adjust the target value for the closed loop power control when the transmitting station is operating in the compressed mode.

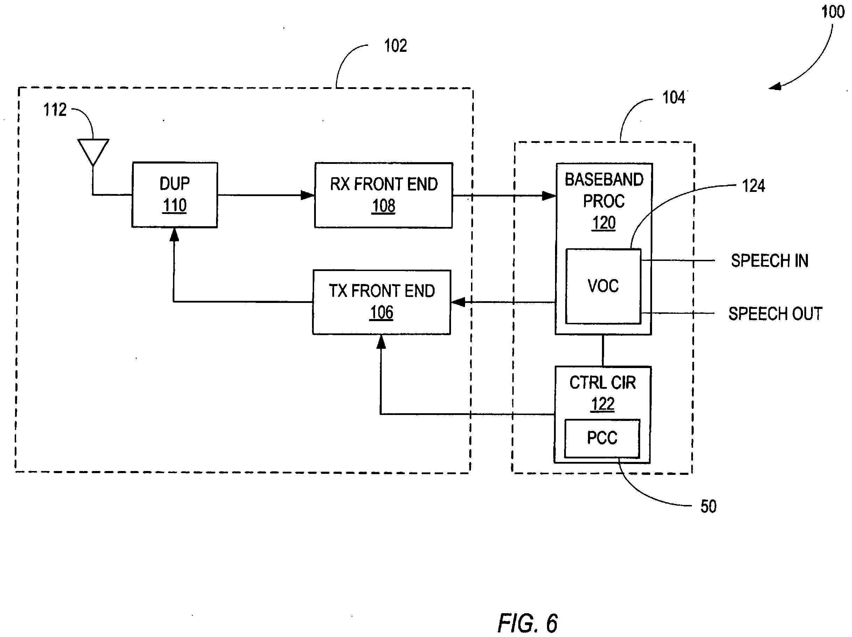

Figure 6 illustrates an exemplary transceiver station 100 according to one embodiment, which may comprise a mobile station 30 or a base station 20. The transceiver station 100 includes a radio frequency section 102 and a digital section 104. The radio frequency section 102 comprises a transmit circuit 106 and a receiver circuit 108 coupled to an antenna 112 via a duplexer 110. Alternatively, the transceiver station 100 may have separate transmit and receive antennas. The transceiver station 100 could also have multiple antennas for both transmission and reception. The transmit circuit 106 upconverts, filters, and amplifies signals output by the digital section 104 for transmission via antenna 112. A D-to-A converter (not shown) converts signals output to the transmit circuit 106. Receive circuit 108 downconverts the receive signals to baseband frequency, and then filters and amplifies the received signal. An A-to-D converter (not shown) converts the received signal to digital form for processing in digital section 104. While only one receive circuit 108 is shown, those skilled in the art will appreciate that a base station 20 will typically include an array of transmit and receive circuits 106, 108 that it can allocate to different mobile stations 30.

The digital section 104 comprises baseband circuit 120 and a control circuit 122. The baseband circuit 120 and control circuit 122 may comprise one or more processors or processing circuits. The baseband circuit 120 processes signals transmitted and received by the transceiver station 100. The baseband circuit 120 encodes, modulates, and spreads the transmitted signals. On the receiver side, the baseband circuit 120 despreads, demodulates, and decodes received signals. The baseband circuit 120 also implements a vocoder 124 for encoding and decoding speech signals. The control circuit 122 controls the overall operation of the transceiver station 100. The control circuit 122 includes a power control circuit 50 as shown in Fig. 4 for performing closed loop power control.

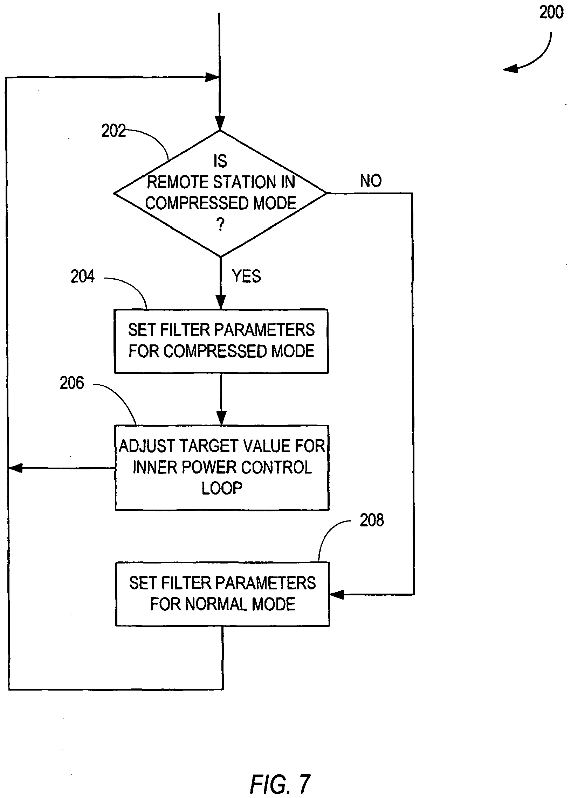

Fig. 7 illustrates an exemplary method 200 of closed loop power control. Control unit 55 determines the current operating mode of the transmitting station (block 202) and determines filter settings based on the operating mode. If the transmitting station is operating in a compressed mode, the control unit 55 sets filter parameters for the power control filter 54 for a compressed mode of transmission (block 204) and generates a target value adjustment factor (block 206). The target value adjustment factor is used by the open loop control circuit 62 to determine the target value for the closed loop control circuit 60. Conversely, if the transmitting station is operating in a normal mode, the control unit 55 sets the filter parameters for the power control filter 54 for a normal mode of transmission (block 208).

The present invention has been described in the context of a conventional voice channel for WCDMA. Release 7 of the WCDMA standard has a mode called Continuous Packet Connectivity (CPC) mode, which is described in the Third Generation Partnership Project (3GPP) Technical Report 25.903 (March 22, 2007). The CPC mode will enable voice over IP (VoIP) in existing R'99 UMTS networks. Like the compressed mode described above, CPC mode is another form of burst mode transmission. Voice packets will be transmitted in bursts on the uplink channel. ACK and NACK bursts may be interleaved with data bursts. The burst pattern may vary in duty factor and burst frequency depending on factors such as system loading, mobile station power, etc.

Those skilled in the art will appreciate that compressed mode operation as described herein represents a trade-off between power savings and system capacity. A heavily loaded system that is operating near its capacity should use the normal transmission mode and fast power control to maximize system capacity. The compressed modes of operation, in general, are desirable when the system is lightly loaded and has excess capacity. During periods of light load, the unused system capacity can be sacrificed for the purpose of saving power by switching to the compressed mode. The parameters of the compressed mode operation may be controlled by the network depending on the system capacity. For example, a lightly loaded system may be able to operate in a compressed mode with a duty factor of 25%. The same system at a moderate load may be able to operate in a compressed mode using a 50% duty factor. A heavily loaded system may disable the compressed mode.

The present invention may, of course, be carried out in other specific ways than those herein set forth without departing from the scope and essential characteristics of the invention. The present embodiments are, therefore, to be considered in all respects as illustrative and not restrictive, and all changes coming within the meaning of the appended claims are intended to be embraced therein.

## Claims

1. A method of closed loop power control in a communication station, said method comprising;
measuring the signal strength of a received signal transmitted from a transmitting
station (20, 30);
filtering said signal strength measurements in a power control filter (54) to generate
filtered signal strength measurements;
generating periodic power control signals based on the filtered signal strength
measurements and transmitting said periodic power control signals to the
transmitting station (20, 30) to control the transmit power level of the
transmitting station (20, 30); and
adapting said power control filter (54) when the transmitting station (20, 30) is
operating in a compressed mode to compensate for intermittent transmission
by the transmitting station (20, 30) in the compressed mode by varying a
length of the power control filter (54).

2. The method of claim 1 wherein varying the length of the power control filter (54) comprises varying the length of the power control filter (54) depending on a duty factor of said received signal in said compressed mode.

3. The method of claim 2 wherein varying the length of the power control filter (54) comprises varying the length of the power control filter (54) further depending on a burst frequency of said received signal in said compressed mode.

4. The method of claim 1 wherein varying the length of the power control filter (54) comprises varying the length of the power control filter (54) depending on a burst frequency of said received signal in said compressed mode.

5. The method of claim 1 wherein generating periodic power control signals based on the filtered signal strength measurements comprises computing a signal-to-noise ratio of the received signal based on said filtered signal strength measurements, comparing the computed signal-to-noise ratio to a target signal-to-noise ratio, and generating power control signals based on an outcome of the comparison.

6. The method of claim 5 further comprising adjusting the target signal-to-noise ratio when the transmitting station (20, 30) is operating in said compressed mode.

7. The method of claim 1 wherein the transmitting station (20, 30) comprises either a mobile station (30) or a base station (20).

8. A transceiver station (100) for a mobile communication system (10), said transceiver station (100) comprising:
a receiver (108) to receive a signal transmitted by a transmitting station (20, 30);
a power control circuit (50) including a measurement circuit (52) to measure the signal
strength of the received signal from the transmitting station (20, 30), a power
control filter (54) to filter the signal strength measurements, and a power
adjustment circuit (56) to generate periodic power control signals based on the
filtered signal strength measurements;
a transmitter (106) to transmit said periodic power control signals to the transmitting
station (20, 30) to control the transmit power level of the transmitting station
(20, 30); and
a control unit (55) to adapt said power control filter (54) when the transmitting station
(20, 30) is operating in a compressed mode to compensate for intermittent
transmission by the transmitting station (20, 30) in the compressed mode by
varying a length of the power control filter (54).

9. The transceiver station (100) of claim 8 wherein the control unit (55) varies the length of the power control filter (54) depending on a duty factor of said received signal in said compressed mode.

10. The transceiver station (100) of claim 9 wherein the control unit (55) varies the length of the power control filter (54) further depending on a burst frequency of said received signal in said compressed mode.

11. The transceiver station (100) of claim 8 wherein the control unit (55) varies the length of the power control filter (54) depending on a burst frequency of said received signal in said compressed mode.

12. The transceiver station (100) of claim 8 wherein the power control circuit (50) computes a signal-to-noise ratio of the received signal based on said filtered signal strength measurements, compares the computed signal-to-noise ratio to a target signal-to-noise ratio, and generates power control signals based on the outcome of the comparison.

13. The transceiver station (100) of claim 12 wherein the control unit (55) further adjusts the target signal-to-noise ratio when the transmitting station (20, 30) is operating in said compressed mode.

14. The transceiver station (100) of claim 8 wherein the transceiver station (100) comprises either a mobile station (30) or a base station (20).

## Patentansprüche

1. Verfahren einer geschlossenen Leistungssteuerschleife in einer Kommunikationsstation, wobei das Verfahren umfasst:
Messen der Signalstärke eines empfangenen Signals, welches von einer Sendestation (20, 30) übertragen wird;
Filtern der Signalstärkemessungen in einem Leistungssteuerfilter (54), um gefilterte Signalstärkemessungen zu erzeugen;
Erzeugen von periodischen Leistungssteuersignalen auf der Grundlage der gefilterten Signalstärkemessungen und Übertragen der periodischen Leistungssteuersignale zu der Sendestation (20, 30), um den Sendeleistungspegel der Sendestation (20, 30) zu steuern; und
Anpassen des Leistungssteuerfilters (54), wenn die Sendestation (20, 30) in einer komprimierten Betriebsart arbeitet, um eine unterbrochene Übertragung von der Sendestation (20, 30) in der komprimierten Betriebsart zu kompensieren, indem eine Länge des Leistungssteuerfilters (54) verändert wird.

2. Verfahren nach Anspruch 1, wobei das Verändern der Länge des Leistungssteuerfilters (54) ein Verändern der Länge des Leistungssteuerfilters (54) in Abhängigkeit von einem Tastverhältnis des empfangenen Signals in der komprimierten Betriebsart umfasst.

3. Verfahren nach Anspruch 2, wobei das Verändern der Länge des Leistungssteuerfilters (54) ein Verändern der Länge des Leistungssteuerfilters (54) ferner in Abhängigkeit einer Burst-Frequenz des empfangenen Signals in der komprimierten Betriebsart umfasst.

4. Verfahren nach Anspruch 1, wobei das Verändern der Länge des Leistungssteuerfilters (54) ein Verändern der Länge des Leistungssteuerfilters (54) in Abhängigkeit von einer Burst-Frequenz des empfangenen Signals in der komprimierten Betriebsart umfasst.

5. Verfahren nach Anspruch 1, wobei das Erzeugen eines periodischen Leistungssteuersignals auf der Grundlage der gefilterten Signalstärkemessungen ein Berechnen eines Signal-zu-Rausch-Verhältnisses des empfangenen Signals auf der Grundlage der gefilterten Signalstärkemessungen, ein Vergleichen des berechneten Signal-zu-Rausch-Verhältnisses mit einem Ziel-Signal-zu-Rausch-Verhältnis, und ein Erzeugen eines Leistungssteuersignals auf der Grundlage eines Ergebnisses des Vergleichs umfasst.

6. Verfahren nach Anspruch 5, ferner umfassend ein Einstellen des Ziel-Signal-zu-Rausch-Verhältnisses, wenn die Sendestation (20, 30) in der komprimierten Betriebsart arbeitet.

7. Verfahren nach Anspruch 1, wobei die Sendestation (20, 30) entweder eine mobile Station (30) oder eine Basisstation (20) umfasst.

8. Sende-/Empfangsstation (100) für ein mobiles Kommunikationssystem (10), wobei die Sende-/Empfangsstation (100) umfasst:
einen Empfänger (100), um ein Signal zu empfangen, welches von einer Sendestation (20, 30) übertragen wurde;
einen Leistungssteuerschaltkreis (50), welcher einen Messschaltkreis (52), um die Signalstärke des von der Sendestation (20, 30) empfangenen Signals zu messen, einen Leistungssteuerfilter (54), um die Signalstärkemessungen zu filtern, und einen Leistungseinstellschaltkreis (56), um periodische Leistungssteuersignale auf der Grundlage der gefilterten Signalstärkemessungen zu erzeugen, aufweist;
einen Sender (106), um die periodischen Leistungssteuersignale zu der Sendestation (20, 30) zu übertragen, um den Übertragungsleistungspegel der Sendestation (20, 30) zu steuern; und
eine Steuereinheit (55), um das Leistungssteuerfilter (54) anzupassen, wenn die Sendestation (20, 30) in einer komprimierten Betriebsart arbeitet, um eine unterbrochene Übertragung durch die Sendestation (20, 30) in der komprimierten Betriebsart zu kompensieren, indem eine Länge des Leistungssteuerfilters (54) verändert wird.

9. Sende-/Empfangsstation (100) nach Anspruch 8, wobei die Steuereinheit (55) die Länge des Leistungssteuerfilters (54) in Abhängigkeit von einem Tastverhältnis des empfangenen Signals in der komprimierten Betriebsart verändert.

10. Sende-/Empfangsstation (100) nach Anspruch 9, wobei die Steuereinheit (55) die Länge des Leistungssteuerfilters (54) ferner in Abhängigkeit von einer Burst-Frequenz des empfangenen Signals in der komprimierten Betriebsart verändert.

11. Sende-/Empfangsstation (100) nach Anspruch 8, wobei die Steuereinheit (55) die Länge des Leistungssteuerfilters (54) in Abhängigkeit von einer Burst-Frequenz des empfangenen Signals in der komprimierten Betriebsart verändert.

12. Sende-/Empfangsstation (100) nach Anspruch 8, wobei der Leistungssteuerschaltkreis (50) ein Signal-zu-Rausch-Verhältnis des empfangenen Signals auf der Grundlage der gefilterten Signalstärkemessungen berechnet, das berechnete Signal-zu-Rausch-Verhältnis mit einem Ziel-Signal-zu-Rausch-Verhältnis vergleicht, und Leistungssteuersignale auf der Grundlage des Ergebnisses des Vergleichs erzeugt.

13. Sende-/Empfangsstation (100) nach Anspruch 12, wobei die Steuereinheit (55) ferner das Ziel-Signal-zu-Rausch-Verhältnis einstellt, wenn die Sendestation (20, 30) in der komprimierten Betriebsart arbeitet.

14. Sende-/Empfangsstation (100) nach Anspruch 8, wobei die Sende-/Empfangsstation (100) entweder eine mobile Station (30) oder eine Basisstation (20) umfasst.

## Revendications

1. Procédé de commande de puissance en boucle fermée dans une station de communication, ledit procédé comprenant le fait :
de mesurer la force d'un signal reçu émis d'une station émettrice (20, 30) ;
de filtrer lesdites mesures de force du signal dans un filtre de commande de puissance (54) pour générer des mesures filtrées de force du signal ;
de générer des signaux de commande de puissance périodiques sur la base des mesures filtrées de force du signal et d'émettre lesdits signaux de commande de puissance périodiques à la station émettrice (20, 30) pour commander le niveau de puissance d'émission de la station émettrice (20, 30) ; et
d'adapter ledit filtre de commande de puissance (54) lorsque la station émettrice (20, 30) fonctionne dans un mode compressé pour compenser une émission intermittente par la station émettrice (20, 30) dans le mode compressé en faisant varier une longueur du filtre de commande de puissance (54).

2. Procédé de la revendication 1 où la variation de la longueur du filtre de commande de puissance (54) comprend la variation de la longueur du filtre de commande de puissance (54) selon un facteur d'utilisation dudit signal reçu dans ledit mode compressé.

3. Procédé de la revendication 2 où la variation de la longueur du filtre de commande de puissance (54) comprend la variation de la longueur du filtre de commande de puissance (54) selon encore une fréquence de salve dudit signal reçu dans ledit mode compressé.

4. Procédé de la revendication 1 où la variation de la longueur du filtre de commande de puissance (54) comprend la variation de la longueur du filtre de commande de puissance (54) selon une fréquence de salve dudit signal reçu dans ledit mode compressé.

5. Procédé de la revendication 1 dans lequel la génération de signaux de commande de puissance périodiques sur la base des mesures filtrées de force de signal comprennent le fait de calculer un rapport signal-bruit du signal reçu sur la base desdites mesures filtrées de force de signal, de comparer le rapport signal-bruit calculé au rapport signal-bruit cible, et de générer les signaux de commande de puissance sur la base d'un résultat de la comparaison.

6. Procédé de la revendication 5 comprenant en outre le fait de régler le rapport signal-bruit cible lorsque la station émettrice (20, 30) est en service dans ledit mode compressé.

7. Procédé de la revendication 1 où la station émettrice (20, 30) comprend soit une station mobile (30) ou bien une station de base (20).

8. Station d'émission-réception (100) pour un système de communication mobile (10), ladite station d'émission-réception (100) comprenant :
un récepteur (108) pour recevoir un signal émis par une station émettrice (20, 30) ;
un circuit de commande de puissance (50) comportant un circuit de mesure (52) pour mesurer la force de signal du signal reçu de la station émettrice (20, 30), un filtre de commande de puissance (54) pour filtrer les mesures de force de signal, et un circuit d'ajustement de puissance (56) pour générer des signaux de commande de puissance périodiques sur la base des mesures filtrées de force de signal ;
un émetteur (106) pour émettre lesdits signaux de commande de puissance périodiques à la station émettrice (20, 30) pour commander le niveau de puissance d'émission de la station émettrice (20, 30) ; et
une unité de commande (55) pour adapter ledit filtre de commande de puissance (54) lorsque la station émettrice (20, 30) est en service dans un mode compressé pour compenser une émission intermittente par la station émettrice (20, 30) dans le mode compressé par la variation d'une longueur du filtre de commande de puissance (54).

9. Station d'émission-réception (100) de la revendication 8 où l'unité de commande (55) fait varier la longueur du filtre de commande de puissance (54) selon un facteur d'utilisation dudit signal reçu dans ledit mode compressé.

10. Station d'émission-réception (100) de la revendication 9 où l'unité de commande (55) fait varier la longueur du filtre de commande de puissance (54) selon encore une fréquence de salve dudit signal reçu dans ledit mode compressé.

11. Station d'émission-réception (100) de la revendication 8 où l'unité de commande (55) fait varier la longueur du filtre de commande de puissance (54) selon une fréquence de salve dudit signal reçu dans ledit mode compressé.

12. Station d'émission-réception (100) de la revendication 8 où l'unité de commande de puissance (55) calcule un rapport signal-bruit du signal reçu sur la base desdites mesures filtrées de force de signal, compare le rapport signal-bruit calculé à un rapport signal-bruit cible, et génère des signaux de commande de puissance sur la base du résultat de la comparaison.

13. Station d'émission-réception (100) de la revendication 12 où l'unité de commande (55) règle en outre le rapport signal-bruit lorsque la station émettrice (20, 30) est en service dans ledit mode compressé.

14. Station d'émission-réception (100) de la revendication 8 où la station d'émission-réception (100) comprend soit une station mobile (30) ou bien une station de base (20).
